# DEMANDE DE BREVET EUROPEEN

(11) **EP 4 406 410 A1**
(43) Date de publication de la demande: **31.07.2024**
(21) Numéro de dépôt: 24154315.6
(22) Date de dépôt: 29.01.2024
(51) Int. Cl.: A01M 7/00

(54) **DISPOSITIF DE CUVE POUR PULVÉRISATEUR ET PULVÉRISATEUR COMPRENANT AU MOINS UN TEL DISPOSITIF**

(30) Priorité: 30.01.2023 FR 2300826
(71) Demandeur: Kuhn SAS, 67700 Saverne (FR)
(72) Inventeur: JARRASSIER, Benoît, 67700 OTTERSTHAL (FR); BONTEMPS, Jean-Baptiste, 67700 SAVERNE (FR); VIRIAT, Laurent, 67440 WESTHOUSE-MARMOUTIER (FR)
(74) Mandataire: Hager, Esther Evelyne

(57) **Abrégé**

La présente invention a pour objet un dispositif de cuve pour pulvérisateur, le dispositif comprenant, d'une part, une cuve (1) comportant un espace interne pour recevoir un produit liquide à épandre, un fond (1b) et au moins une paroi latérale (1c) s'élevant depuis le fond (1b) et, d'autre part, au moins une ouverture d'accès (2) supérieure, du type trou d'homme, ménagée dans la partie haute de la cuve (1) et au moins un composant fonctionnel (3a, 3d, 3e) situé dans l'espace interne de la partie basse de la cuve (1), l'ouverture d'accès (2) supérieure comportant un orifice et un dispositif de fermeture (2b).

Il se caractérise en ce qu'il comprend en outre au moins une ouverture d'accès (4) inférieure ménagée dans la cuve (1) à un niveau inférieur à celui de l'ouverture d'accès (2) supérieure et permettant d'accéder, depuis l'extérieur de la cuve, au ou à au moins l'un des composant(s) fonctionnel(s) situé(s) dans la partie basse de la cuve.

## Description

La présente invention concerne le domaine des pulvérisateurs agricoles et plus particulièrement des cuves principales de tels pulvérisateurs. Elle a pour objet un dispositif de cuve pour pulvérisateur et un pulvérisateur comprenant au moins un tel dispositif de cuve.

On sait qu'un pulvérisateur comporte généralement une cuve, considérée comme formant la cuve principale, une pompe, une rampe d'épandage et un système de régulation. Le pulvérisateur dispose également généralement d'une cuve de rinçage pour diluer les restes de liquide présents dans la cuve et d'un réservoir d'eau permettant à l'opérateur/l'utilisateur de se nettoyer les mains dans les champs.

La cuve principale sert à la préparation, à l'entreposage, au brassage et au transport du liquide à épandre au champ. Le volume est une caractéristique essentielle de la cuve puisque l'autonomie du pulvérisateur dépend du volume de liquide embarqué. Sa forme doit répondre à plusieurs exigences, notamment posséder des orifices de remplissage et de vidange, accessibles, pour procurer à l'utilisateur de bonnes conditions de travail, assurer une vidange complète possible et posséder une prise d'air pour compenser la dépression provoquée par l'aspiration du liquide. Le liquide à épandre est le plus souvent un mélange d'eau et de produits actifs du type chimiques ou phytosanitaires. Dans le cas d'un apport d'engrais, le liquide contenu dans la cuve est de l'azote liquide. L'engrais liquide est dans ce cas non diluée avec de l'eau. En outre, une jauge située dans l'espace interne de la cuve principale permet de connaître la quantité de liquide présente dans la cuve.

La pompe aspire le liquide contenu dans la cuve principale pour le refouler sous pression dans la rampe d'épandage. Le système de régulation permet d'épandre la bonne dose en fonction de divers paramètres (vitesse d'avance, pression de pulvérisation, par exemple).

En outre, des composants fonctionnels spécifiques sont implantés dans la cuve principale pour réaliser les fonctions d'aspiration, de vidange, d'agitation et de rinçage dans la partie haute (ou supérieure) et dans la partie basse (ou inférieure) de la cuve principale. En principe, les composants pour le rinçage, le retour en cuve et la prise d'air sont fixés dans la partie haute de la cuve principale et les composants pour l'aspiration, la vidange et le brassage sont fixés dans la partie basse. Une entrée d'incorporation de produit phytosanitaire est en outre généralement prévue dans la partie haute ou basse de la cuve principale.

La cuve principale comprend en outre au moins une ouverture d'accès du type trou d'homme située dans la partie haute de la cuve principale, généralement à son point le plus haut, c'est-à-dire le point le plus le plus élevé (ou le plus haut) par rapport au fond de la cuve principale. Cette ouverture d'accès présente des dimensions d'ouverture permettant le passage à travers celle-ci de l'ensemble du corps d'une personne. Un opérateur peut donc entrer entièrement dans la cuve principale, par exemple pour accéder aux composants fonctionnels ou pour pouvoir monter ces derniers dans l'espace interne de la cuve principale.

Toutefois, si l'accès aux composants fonctionnels et/ou leur montage dans la partie haute de la cuve principale est possible à partir de cette ouverture d'accès, l'accès à ces composants et/ou leur montage dans la partie basse de la cuve est moins aisé, plus délicat, voire impossible, voire dangereux lors d'un dépannage ou d'une maintenance puisque la cuve principale est alors déjà contaminée par des produits phytosanitaires.

D'autre part, si pour éviter d'entrer dans une cuve déjà contaminée à cause d'un composant défectueux, il est possible d'utiliser un outil allongé spécifique conçu pour accéder au système de fixation du composant et l'échanger, atteindre une cible à distance avec un tel outil allongé n'est pas une opération aisée. En effet, le volume de la cuve peut s'étendre jusqu'à 11000 litres et donc la distance entre l'ouverture supérieure et le composant à remplacer peut dépasser 2,5 mètres.

La présente invention a pour but de pallier l'un au moins de ces inconvénients.

A cet effet, le dispositif de cuve, selon la présente invention, pour pulvérisateur, le dispositif comprenant, d'une part, une cuve comportant un espace interne apte et destiné à recevoir un produit liquide à épandre, un fond et au moins une paroi latérale s'élevant depuis le fond et, d'autre part, au moins une ouverture d'accès, dite ouverture d'accès supérieure, du type trou d'homme, ménagée dans la partie haute de la cuve et au moins un composant fonctionnel situé dans l'espace interne de la partie basse de la cuve, l'ouverture d'accès supérieure comportant un orifice et un dispositif de fermeture, se caractérise en ce qu'il comprend en outre au moins une ouverture d'accès inférieure ménagée dans la cuve à un niveau inférieur à celui de l'ouverture d'accès supérieure et permettant d'accéder, depuis l'extérieur de la cuve, au ou à au moins l'un des composant(s) fonctionnel(s) situé(s) dans la partie basse de la cuve.

La présente invention a également pour objet un pulvérisateur comprenant au moins une cuve, notamment une cuve principale, caractérisé en ce que la ou au moins l'une des cuve(s) consiste en un dispositif de cuve selon la présente invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue de profil d'un dispositif de cuve, selon la présente invention, pour pulvérisateur trainé, dans un mode de réalisation particulier dans lequel l'ouverture d'accès inférieure est ménagée dans l'une des parois latérales au-dessus du fond de la cuve,
[Fig. 2] est une vue en coupe d'un dispositif de cuve selon la présente invention dans un autre mode de réalisation dans lequel l'ouverture d'accès inférieure est ménagée dans la partie du fond de la cuve formant le point le plus bas de cette dernière,
[Fig. 3] montre, en vue de profil, l'élément de fermeture amovible de l'ouverture d'accès inférieure représentée sur la figure 2,
[Fig. 4] est une vue à plus grande échelle de la partie du fond de la cuve représentée sur la figure 2 avec l'ouverture d'accès inférieure en position de fermeture de l'élément de fermeture amovible,
[Fig. 5] est une vue en perspective de l'élément de fermeture amovible représentée sur la figure 3,
[Fig. 6] est une vue arrière d'un dispositif de cuve, selon la présente invention, pour pulvérisateur porté, dans un mode de réalisation particulier dans lequel l'ouverture d'accès inférieure est ménagée dans la paroi latérale arrière au-dessus du fond de la cuve,
[Fig. 7] est une vue en coupe d'un dispositif de cuve selon un autre mode de réalisation dans lequel l'ouverture d'accès inférieure est ménagée dans la partie basse de la cuve, dans la paroi frontale.

Les figures annexées montrent un dispositif de cuve, selon la présente invention, pour pulvérisateur, ledit dispositif comprenant, d'une part, une cuve 1 comportant un espace interne 1a apte et destiné à recevoir un produit liquide à épandre, un fond 1b et au moins une paroi latérale 1c s'élevant depuis le fond 1b et, d'autre part, au moins une ouverture d'accès 2, dite ouverture d'accès 2 supérieure, du type trou d'homme, ménagée dans la partie haute de la cuve 1 et au moins un composant fonctionnel 3a, 3b, 3c, 3d, 3e, 3f situé dans l'espace interne 1a de la partie basse de la cuve 1. La ou chaque ouverture d'accès 2 supérieure comporte un orifice 2a et un dispositif de fermeture 2b. De préférence, l'orientation de l'ouverture d'accès 2 supérieure est sensiblement horizontale.

On entend par ouverture d'accès 2 supérieure du type trou d'homme, une ouverture d'accès 2 comportant un orifice 2a apte et destiné à permettre le passage à travers son orifice 2a du corps d'une personne (au moins de taille moyenne). Grâce à cette ouverture d'accès 2, la personne peut accéder et donc entrer entièrement (complètement) dans l'espace interne 1a de la cuve 1 pour accéder au(x) composant(s) fonctionnel(s). Depuis l'intérieur de la cuve 1, la personne, qui est passée par l'ouverture d'accès 2 supérieure pourra monter voire démonter le ou au moins l'un des composant(s) fonctionnel(s) dans la cuve 1. Pour le montage et/ou le démontage du ou d'au moins l'un ou de certains composant(s) fonctionnel(s), la personne à l'intérieur de la cuve 1 pourra être assistée par une personne à l'extérieur.

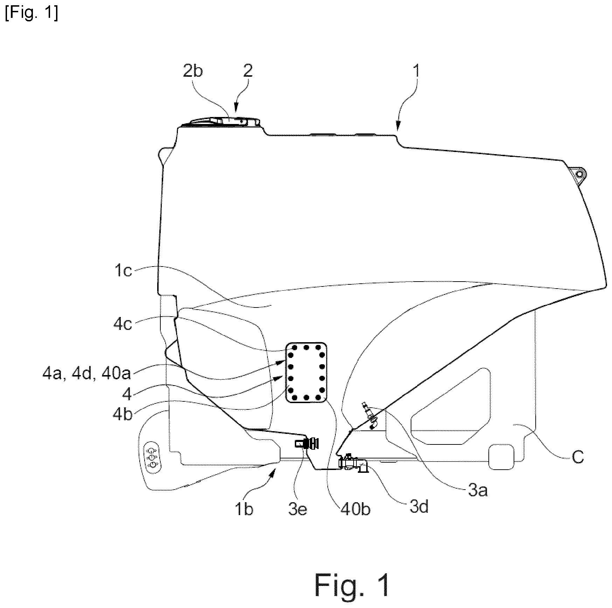

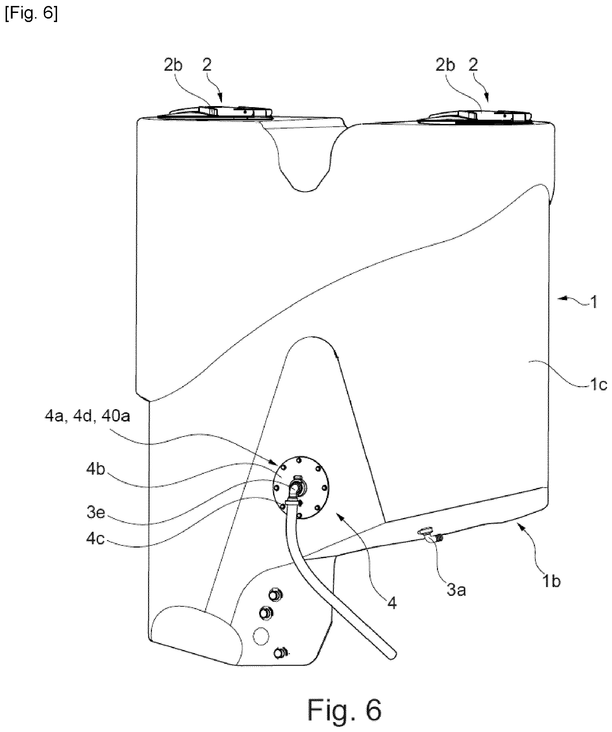

Ce dispositif de cuve est destiné à être monté sur un pulvérisateur utilisé dans le domaine agricole. La figure 6 représente une cuve 1 plutôt compacte qui convient à un pulvérisateur de type porté. La cuve 1 est fixée sur un châssis (non représenté) qui supporte le dispositif d'attelage trois points d'un véhicule du type tracteur. La cuve 1 de la figure 1 convient, quant à elle, à un pulvérisateur trainé. La cuve 1 est disposée sur un châssis C longitudinal comportant un timon destiné à être attelé à l'arrière d'un tracteur. Sur la figure 1, l'un des longerons horizontaux a été occulté pour voir ou mieux visualiser le fond 1b de la cuve 1. Un pulvérisateur trainé autorise un volume de cuve 1 plus important. La cuve 1 dispose généralement d'une forme plus allongée, son volume est plus important. Dans une autre réalisation, le pulvérisateur peut être un pulvérisateur automoteur et le dispositif de cuve selon l'invention peut être présent/monté sur un tel pulvérisateur automoteur. La cuve 1 principale, comme c'est généralement le cas, peut être montée sur un châssis roulant. Avec un pulvérisateur automoteur/automoteur de pulvérisation, un important débit de chantier journalier est possible puisque la cuve 1 dispose d'une grande capacité et la rampe d'épandage est large.

Qu'importe le type de pulvérisateur, porté ou trainé ou automoteur, il comporte généralement une réserve de liquide (la cuve), une pompe, une rampe d'épandage et un système de régulation. Dans la suite de la description, le dispositif de cuve selon la présente invention peut alors former la cuve 1 principale (ou la réserve de liquide). Compte tenu de ce qui précède, selon la présente invention, un perçage apte et destiné à permettre la fixation d'un composant fonctionnel n'est pas à considérer comme étant une ouverture d'accès, que ce soit une ouverture d'accès inférieure 4, 5 selon la présente invention ou une ouverture d'accès 2 supérieure. Le perçage est par exemple une petite ouverture ménagée dans la cuve 1 pour recevoir, par exemple, une buse de brassage. Dans le cas d'un tel perçage, l'étanchéité est réalisée au moyen d'un passe-cloison. Il se compose d'un raccord fileté mâle traversant la paroi de la cuve 1 muni d'un épaulement, d'un joint plat assurant l'étanchéité et d'un écrou plat maintenant l'ensemble. Le composant fonctionnel pourra être installé sur le passe-cloison qui réalise l'étanchéité. Un tel perçage n'est pas une ouverture d'accès supplémentaire selon l'invention, puisque le perçage ne permet d'accéder à au moins deux composants fonctionnels sans entrer dans la cuve 1.

Conformément à la présente invention, un tel dispositif de cuve comprend en outre au moins une ouverture d'accès 4, 5 inférieure ménagée dans la cuve 1 à un niveau inférieur à celui de l'ouverture d'accès 2 supérieure et permettant d'accéder, depuis l'extérieur de la cuve 1, au ou à au moins l'un des composant(s) fonctionnel(s) 3a, 3b, 3c, 3d, 3e, 3f situé(s) dans la partie basse de la cuve 1. Grâce à cette ouverture supplémentaire, les composants fonctionnels disposés dans la partie basse de la cuve 1 sont plus facilement accessibles, et surtout sans avoir besoin d'entrer totalement dans la cuve 1 par l'ouverture d'accès 2 supérieure. La ou au moins l'une des ouverture(s) d'accès 4, 5 inférieure(s) est ménagée dans (ou placée sur) la cuve 1 de manière à être accessible lorsque le pulvérisateur est complètement équipé avec les rampes d'épandage, la pompe, les différentes cuves, etc... L'accès à l'espace interne 1a de la cuve 1, plus particulièrement aux composants fonctionnels, peut se faire de préférence avec la rampe d'épandage repliée à partir de la configuration transport du pulvérisateur, notamment lorsque la cuve 1 est vide et est rincée. L'accès à l'espace interne 1a est également possible lorsque la rampe d'épandage est dépliée.

La partie basse ou haute de la cuve 1 doit être comprise comme étant déterminée par rapport à la hauteur de la cuve 1 entre son point le plus haut et son point le plus bas. La délimitation entre la partie basse et la partie haute peut être considérée comme étant un niveau correspondant à la moitié ou sensiblement à la moitié de la hauteur de la cuve 1. La délimitation se fait par exemple selon un plan horizontal. On comprend que la partie haute s'étend au-dessus et/ou à partir de cette délimitation et la partie basse s'étend au-dessous et/ou à partir de cette délimitation. Toutefois dans le cas où au moins l'une de ces dernières ne correspond pas respectivement à la moitié haute ou basse de la cuve 1, la présente invention peut prévoir que la partie haute et la partie basse de la cuve 1 soient séparées par une partie intermédiaire ou médiane d'une certaine hauteur. Le fond 1b de la cuve 1 peut s'étendre, entièrement ou au moins en partie, horizontalement ou être, entièrement ou au moins en partie, incliné ou en pente par rapport à un plan (de référence) ou une surface pouvant être horizontal(e).

Une telle ouverture d'accès 4, 5 inférieure située à proximité du ou d'au moins l'un des composant(s) fonctionnels 3a, 3b, 3c, 3d, 3e, 3f c'est-à-dire à une distance nettement inférieure à celle séparant ces derniers de la ou des ouvertures d'accès 2 supérieure(s), permet ainsi l'accès, ou un accès plus aisé, au(x) composant(s) fonctionnel(s) présent(s) dans la partie basse de la cuve 1 et qui ne sont pas ou difficilement accessibles par la ou les ouvertures d'accès 2 supérieure(s). L'accès à ces composants fonctionnels 3a, 3b, 3c, 3d, 3e, 3f peut être réalisé directement par la personne qui utilise directement sa main en faisant passer au moins son bras par l'ouverture d'accès 4, 5 inférieure correspondante. L'accès peut également être réalisé indirectement par l'intermédiaire d'un outil destiné à être manipulé par la personne. Il s'agit, par exemple, d'un outil allongé spécifique passant à travers l'ouverture d'accès 4, 5 inférieure. L'outil est alors conçu pour accéder, par exemple, au système de fixation du composant ou pour amener et fixer le composant fonctionnel 3a, 3b, 3c, 3d, 3e, 3f à l'endroit prévu dans la cuve 1. Bien entendu, l'accès à l'intérieur de la cuve 1, en passant à travers une telle ouverture d'accès 4, 5 inférieure depuis l'extérieur de la cuve 1, peut aussi être réalisé par un robot ou autre dispositif conçu pour accomplir automatiquement des tâches, par exemple le bras d'un robot programmé pour accéder à l'intérieur de la cuve 1 dans sa moitié basse. Une telle opération du robot peut être prévue en usine lors de la réalisation de la cuve 1 et du montage du ou des composant(s) fonctionnel(s) dans celle-ci.

De préférence, comme on peut le voir sur les figures 1 à 7, l'ouverture d'accès 4, 5 inférieure comprend un orifice 4a, 5a et un dispositif de fermeture 4b, 5b, 4c, 5c, 4d, 5d. Le dispositif de fermeture 4b, 5b, 4c, 5c, 4d, 5d peut comporter un élément de fermeture 4b, 5b, de préférence amovible, des moyens de verrouillage 4c, 5c et des moyens d'étanchéité 4d, 5d. Le dispositif de fermeture 4b, 5b, 4c, 5c, 4d, 5d permet, dans une position de fermeture, de fermer hermétiquement l'orifice 4a, 5a tout en résistant à la pression exercée par le produit liquide et, dans une position d'ouverture, d'ouvrir l'orifice 4a, 5a de sorte à créer un accès à l'espace interne 1a. Grâce à l'ouverture d'accès 4, 5 inférieure notamment à l'orifice 4a, 5a, la personne peut accéder, depuis l'extérieur de la cuve 1, à plusieurs composants fonctionnels 3a, 3b, 3c, 3d, 3e, 3f situés dans la partie basse de la cuve 1. De préférence, l'ouverture d'accès 4, 5 inférieure permet d'accéder à au moins deux composants fonctionnels 3a, 3b, 3c, 3d, 3e, 3f. Avantageusement, les deux composants fonctionnels sont de nature différente. Par exemple l'orifice inférieur 4a, 5a permet d'atteindre l'arrivée d'aspiration 3b et la vanne de vidange 3d depuis l'extérieur de de la cuve 1 ou l'arrivée d'agitation 3c et le flotteur 3f. L'accès à plusieurs composants fonctionnels depuis l'ouverture d'accès supplémentaire permet de réaliser une vérification de ces composants et de les remplacer le cas échéant directement depuis l'extérieur de la cuve 1, sans que la personne ne pénètre dans l'espace interne 1a de la cuve 1. Il est donc particulièrement intéressant de placer l'ouverture d'accès 4, 5 inférieure sur la cuve 1 à proximité des composants fonctionnels, ici des composants localisés dans le fond de la cuve 1. On remarque que certains composants fonctionnels sont directement fixés sur le dispositif de fermeture 4b, 5b. L'accès à ces composants est alors encore plus aisé.

On notera que l'étanchéité du dispositif de fermeture 2b d'une ouverture d'accès 2 supérieure du type trou d'homme utilisée classiquement est seulement prévue pour empêcher les éclaboussures et non pour supporter une pression d'eau ou de produit liquide présent dans la cuve 1. En effet, l'ouverture d'accès 2 supérieure s'étend généralement au point le plus haut de la cuve 1, endroit où la pression de liquide est moindre, voire nulle ou inexistante. Le dispositif de fermeture 2b peut être un couvercle pouvant être vissé ou disposant d'une fixation rapide de type quart de tour. Alternativement, le dispositif de fermeture 2b de l'ouverture d'accès 2 supérieure peut être configuré de manière à être étanche à la pression et aux liquides.

Dans une forme préférentielle, les dimensions (ou la taille) de l'orifice 4a, 5a de l'ouverture d'accès 4, 5 inférieure sont inférieures à celles de l'orifice 2a de l'ouverture d'accès 2 supérieure. En effet, plus les dimensions de l'orifice 4a, 5a seront réduites plus la réalisation de l'étanchéité vue plus haut sera aisée à réaliser. Dans une autre forme de réalisation, les dimensions de l'ouverture d'accès 4, 5 inférieure sont similaires ou identiques à celles de l'orifice 2a de l'ouverture d'accès 2 supérieure. Si l'orifice 4a, 5a dispose de dimensions sensiblement identiques à celles de l'orifice 2a, le remplacement de l'un des composants fonctionnels dans la partie basse de la cuve 1 est facilité puisque la personne pourra s'introduire partiellement dans la cuve 1. Celle-ci pourra passer au moins la tête et les deux membres supérieurs (bras, avant-bras, main) pour à la fois manipuler et voir les manipulations à réaliser. Selon encore une autre forme de réalisation, les dimensions de l'ouverture d'accès 4, 5 inférieure sont supérieures à celles de l'orifice 2a de l'ouverture d'accès.

De préférence, la présente invention peut prévoir que l'ouverture d'accès 4, 5 inférieure, c'est-à-dire la ou au moins l'une des ouverture(s) d'accès 4, 5 inférieure(s), soit située dans la partie basse de la cuve 1, de préférence à proximité du fond 1b de la cuve 1. Cette caractéristique permet un accès plus facile aux composants fonctionnels 3a, 3b, 3c, 3d, 3e, 3f situés dans la partie basse de la cuve 1.

De préférence, l'orifice 4a, 5a de l'ouverture d'accès 4, 5 inférieure présente une forme circulaire, rectangulaire ou carrée, ou tout autre forme permettant de créer une ouverture permettant un tel accès dans l'espace interne de la cuve 1 pour pouvoir atteindre ou monter/amener, et de manière aisée ou facilitée, le ou au moins l'un des composant(s) fonctionnel(s) 3a, 3b, 3c, 3d, 3e, 3f présent(s) dans la cuve 1.

Dans une première forme de réalisation de la localisation de la ou d'au moins l'une des ouverture(s) d'accès 4 inférieure(s), comme on peut le voir sur les figures 1 et 6, l'ouverture d'accès 4 inférieure peut être ménagée dans la ou l'une des paroi(s) latérale(s) 1c de la cuve 1 au-dessus du fond 1b de la cuve 1. L'orientation de l'ouverture d'accès 4 inférieure est sensiblement verticale. La figure 1 montre une ouverture d'accès 4 inférieure de forme rectangulaire. Selon une alternative, la cuve 1 peut comprendre une ouverture d'accès 4 inférieure ménagée dans chacune des parois latérales 1c. Selon une autre alternative, la cuve 1 peut comprendre une ouverture d'accès 4 inférieure ménagée dans la paroi latérale gauche (celle visible sur la figure 1) et une ouverture d'accès 4 inférieure ménagée dans la paroi latérale droite de la cuve 1. Sur la figure 6, l'ouverture d'accès 4 inférieure est de forme circulaire et est située sur la face arrière de la cuve 1. Elle pourrait être prévue sur la face avant, mais celle-ci est difficilement accessible lorsque le pulvérisateur est attelé à l'arrière du tracteur. Selon une alternative, lorsque la rampe d'épandage est repliée à l'arrière de la cuve 1, l'ouverture d'accès 4 inférieure peut être prévue pour être ménagée dans l'une des faces latérales. A noter que le terme « côté » de la cuve 1 peut être utilisé dans la présente invention à la place du terme « face ».

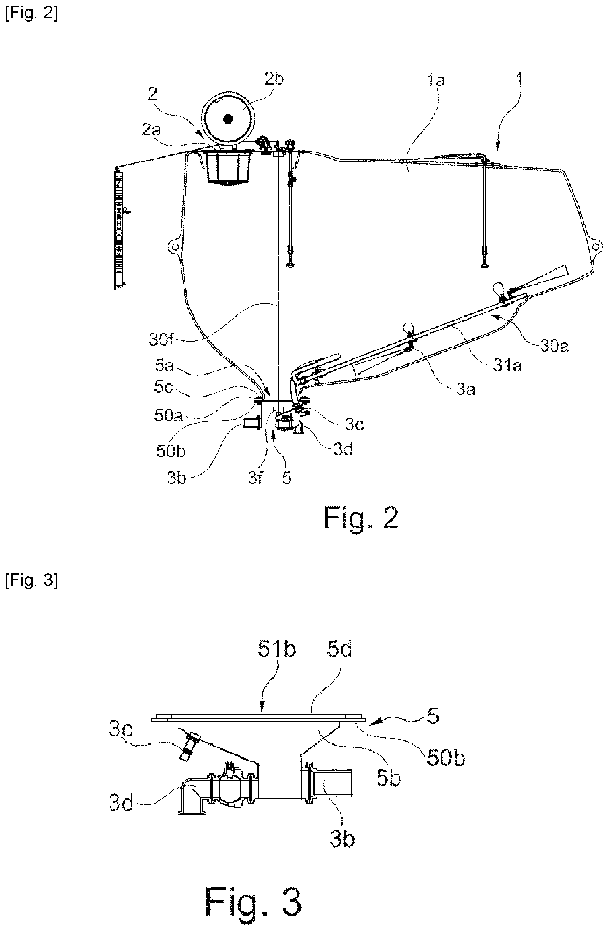

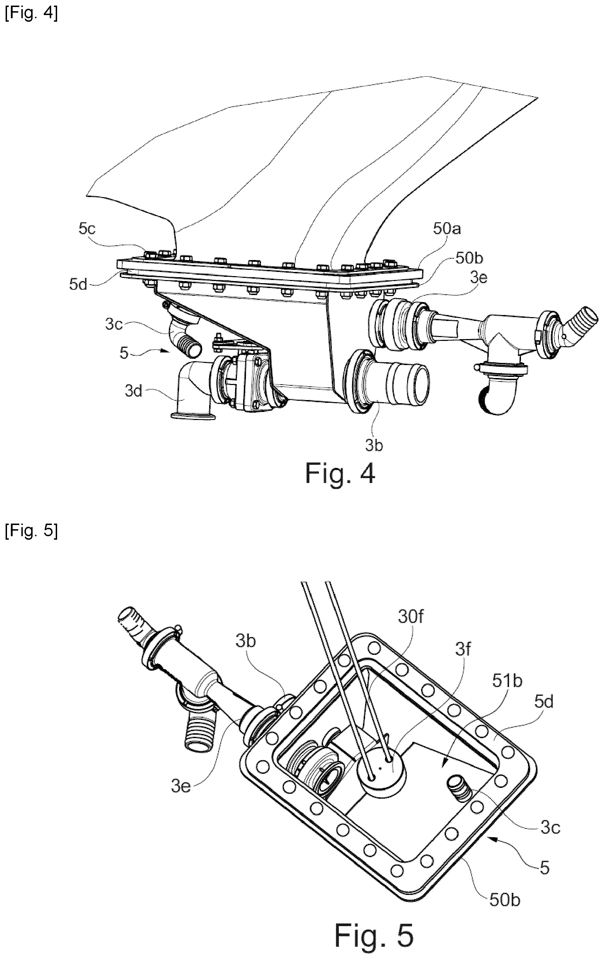

Dans une première forme de réalisation de la localisation de la ou d'au moins l'une des ouvertures d'accès 5 inférieure, comme on peut le voir sur les figures 2, 4, l'ouverture d'accès 5 inférieure peut être ménagée dans le fond 1b de la cuve 1, de préférence dans la partie du fond 1b formant le point le plus bas de la cuve 1. L'orifice 5a est avantageusement orienté horizontalement. L'orientation de l'orifice 5a est sensiblement identique à celle de l'orifice 2a de l'ouverture d'accès 2 supérieure.

Si on se réfère aux figures 2, 4, 5 dans le cas où l'ouverture d'accès 5 inférieure est ménagée dans la partie du fond 1b formant le point le plus bas de la cuve 1, celle-ci peut alors être configurée de sorte à faire office de ou former un puisard. Dans ce cas, l'élément de fermeture 5b de l'ouverture d'accès 5 inférieure peut comporter une cavité 51b s'ouvrant vers l'extérieur de sorte à communiquer, en position de fermeture de l'élément de fermeture 5b, avec l'espace interne 1a de la cuve 1 à travers l'orifice 5a de l'ouverture d'accès 5 inférieure et à recevoir le produit liquide. Dans le cas d'une ouverture d'accès 5 inférieure formant un puisard, l'accès aux composants fixés dans la partie basse de la cuve 1 se fera par en dessous. Cette réalisation convient plutôt à un pulvérisateur de type trainé, la personne accédera au puisard en passant sous le châssis supportant la cuve 1. Le châssis est alors conçu pour permettre un démontage du puisard et plus particulièrement de l'élément de fermeture 5b.

Dans ce dernier cas, l'orifice 4a, 5a de l'ouverture d'accès 4, 5 inférieure peut être entouré par un bord de verrouillage, dit premier bord 40a, 50a de verrouillage, de préférence plat. En outre, l'élément de fermeture 4b, 5b peut être amovible et peut comporter un bord de verrouillage, dit deuxième bord 40b, 50b de verrouillage, de préférence plat (figures 2, 4, 5). Les premier et deuxième bords 40a, 50a, 40b, 50b de verrouillage peuvent alors être immobilisés l'un par rapport à l'autre grâce aux moyens de verrouillage 4c, 5c dans la position de fermeture.

Les moyens d'étanchéité 4d, 5d peuvent consister en au moins un joint d'étanchéité, de préférence plat ou torique, intercalé et pressé entre les premier et deuxième bords 40a, 50a, 40b, 50b périphériques (voir notamment les figures 4, 5).

De préférence, l'élément de fermeture 5b de l'ouverture d'accès 5 de type puisard peut être une structure mécano soudée dans le but d'optimiser les volumes morts.

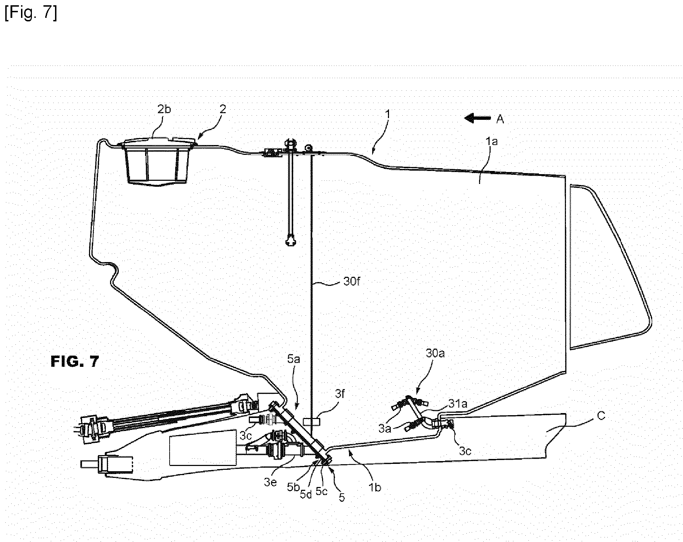

La figure 7 illustre un dispositif de cuve selon un autre mode de réalisation dans lequel l'ouverture d'accès inférieure 5 est ménagée dans la partie basse de la cuve 1. La cuve 1, de grande capacité, est destinée à être fixée sur le châssis C d'un pulvérisateur trainé. La forme de la cuve 1 est allongée, sa conception est telle que le centre de gravité du pulvérisateur soit le plus bas possible. Les différents éléments de fixation de la cuve 1 sur le châssis C ne sont pas représentés. L'ouverture d'accès 2 supérieure s'étend sur la partie avant du dispositif de cuve, compte tenu de la direction A. Cette ouverture d'accès 2 se situe au point le plus haut de cuve 1. Comme pour les autres exemples de réalisation, la cuve 1 est pourvue d'une ouverture d'accès inférieure 5. Cette ouverture supplémentaire est située en dessous de l'ouverture d'accès 2 supérieure, elle est ménagée dans la partie basse de la cuve 1. De préférence, l'ouverture d'accès 5 inférieure s'étend dans le fond 1b de la cuve 1. Cette ouverture d'accès 5 inférieure ménagée dans la cuve 1 intègre le point le plus bas de la cuve 1. Grâce à cette ouverture d'accès 5 inférieure, l'accès aux composants 3a, 3c, 3e et 3f implantés dans la partie basse l'espace interne 1a de la cuve 1 est facilité. D'une manière particulièrement avantageuse, l'accès aux composants se fait depuis l'extérieur de la cuve 1, sans y pénétrer. Selon la réalisation représentée, l'orifice 5a inférieur s'étend entre deux plans sensiblement inclinés, le premier étant formé par la partie basse de la paroi avant de la cuve 1 et le deuxième par la paroi réalisant le fond 1b de cuve 1. Cette ouverture d'accès 5 inférieure comporte un orifice 5a et un dispositif de fermeture 5b incluant un moyen de verrouillage 5c et un moyen d'étanchéité 5d. Dans cette réalisation, l'ouverture d'accès 5 inférieure est avantageusement inclinée par rapport à l'horizontale. L'orientation de l'ouverture d'accès 5 inférieure est d'environ 45° par rapport à l'ouverture d'accès 2 supérieure. Une telle inclinaison d'environ 45° de l'ouverture d'accès permet d'atteindre facilement les différents composants fonctionnels 3a, 3c, 3e, 3f disposés dans l'espace interne 1a de la cuve 1, depuis l'extérieur de la cuve 1. L'ouverture d'accès 5 inférieure se situe avantageusement au voisinage du milieu de la cuve 1 compte tenu de son encombrement en longueur selon la direction A. L'ouverture d'accès 5 inférieure s'étend à l'avant de la cuve 1, permettant un accès plus facile pour le démontage/montage du dispositif de fermeture 5b. Par ailleurs, le positionnement de l'ouverture supplémentaire à l'avant de la cuve 1 permet une longueur réduite des tuyaux reliant les composants fonctionnels au dispositif de commande du fonctionnement et des vannes du pulvérisateur. Le dispositif de commande du fonctionnement et des vannes du pulvérisateur est généralement placé à l'avant du châssis C. Dans l'exemple représenté, il s'agit d'une plaque qui vient boucher l'orifice 5a. Cette plaque est avantageusement de forme rectangulaire, carrée ou ronde. La plaque est notamment destinée à porter au moins une parties des composants fonctionnels présents dans la partie basse de la cuve 1. Les formes de l'orifice 5a inférieur et du dispositif de fermeture 5b correspondant sont complémentaires, une forme quelconque pourrait être envisagée. Selon des réalisations non représentées, l'ouverture d'accès 5 inférieure de la cuve 1 peut être inclinée selon d'autres angles que celui d'environ 45° décrit précédemment. L'inclinaison pourrait être comprise entre 0° et 360°. Selon une autre réalisation non représentée, l'ouverture d'accès 5 inférieure est dirigée vers l'arrière, compte tenu de la direction A ou alors sur l'une des parois latérales de la cuve 1.

Si on se réfère aux figures 2, 4, 5, 6 et 7, on peut voir que l'élément de fermeture 4b, 5b peut être apte et destiné à supporter et/ou recevoir fonctionnellement le ou au moins l'un des composant(s) fonctionnel(s) 3a, 3b, 3c, 3d, 3e, 3f situé(s) dans la moitié basse de la cuve 1. Ainsi, plus particulièrement dans le cas où l'ouverture d'accès 5 inférieure fait office de puisard, l'élément de fermeture 5b peut supporter, et/ou recevoir dans sa cavité 51b, par exemple, cinq composants fonctionnels 3b, 3c, 3d, 3e, 3f : à savoir une arrivée d'aspiration 3b, une arrivée d'agitation 3c, une vanne de vidange 3d, une arrivée d'incorporation 3e, un flotteur 3f d'une jauge de niveau 30f. L'arrivée d'incorporation 3e permet l'entrée dans l'espace interne 1a de la cuve 1 d'un produit actif, par exemple un produit chimique ou phytosanitaire. Le produit actif est destiné à être mélangé avec un autre produit liquide tel que de l'eau contenue dans la cuve 1 pour réaliser le produit à épandre pour les applications phytosanitaires. Pour cela, le pulvérisateur peut disposer d'un bac d'incorporation qui facilite la préparation de la bouillie. Le produit actif est versé dans ce bac d'incorporation et est aspiré par l'eau circulant au niveau d'un venturi (passage d'un jet d'eau sous pression au niveau d'un rétrécissement crée une dépression qui provoque l'aspiration du produit actif) et est envoyé vers la cuve 1 principale. La cuve 1 doit être maintenue sous agitation pour favoriser la dispersion du produit actif lors de l'incorporation, lors du transport et de l'épandage afin de maintenir l'homogénéité de la bouillie. L'agitation du liquide doit être assurée en permanence. L'agitation est réalisée au moyen d'un ou plusieurs agitateurs 3a ou d'une rampe de brassage 30a regroupant plusieurs agitateurs 3a. L'arrivée d'aspiration 3b permet via une pompe non représentée l'aspiration du produit contenu dans la cuve 1 pour le refouler dans une rampe d'épandage. La cuve 1 est équipée d'une vanne de vidange 3d qui peut être disposée, comme c'est le cas généralement, au point le plus bas pour permettre la vidange de la cuve 1. Par ailleurs, un pulvérisateur peut également être utilisé pour fertiliser les cultures grâce à un engrais liquide. La cuve 1 est alors destinée à contenir de l'engrais liquide sous forme pure (sans être dilué avec de l'eau), par exemple de l'azote liquide.

On comprend que, du fait de leur fonction d'aspiration et de vidange, les composants fonctionnels 3b, 3d, formant respectivement l'arrivée d'aspiration et la vanne de vidange, sont situés de préférence au fond de la cavité 51b de l'élément de fermeture 5b formant le puisard (voir notamment les figures 4 et 5). D'autres composants fonctionnels, tels que l'arrivée d'incorporation 3e, peuvent être prévus dans la partie haute de la cuve 1 et leur accessibilité et ou leur montage seraient dans ce cas rendu possible depuis l'ouverture d'accès 2 supérieure bien qu'une ouverture d'accès inférieure 4 pourrait être prévue pour permettre également l'accès à au moins un composant fonctionnel monté dans la partie haute de la cuve 1.

Tel que visible sur la figure 2, l'arrivée d'agitation 3c peut être apte et destinée à être connectée à une rampe 30a de brassage. La rampe 30a de brassage peut être fixée dans la cuve 1 en s'étendant dans la partie basse de la cuve 1. La rampe 30a de brassage peut être fixée par exemple sur le fond 1b. Le fait de regrouper les agitateurs 3a sur une telle rampe 30a de brassage nécessite de faire des compromis par rapport au choix de leur emplacements, mais ceci permet de s'affranchir des passes-cloisons (et raccords) utilisés actuellement pour monter chaque agitateur 3a (voir figure 1) dans la cuve 1 et facilite donc la gestion de l'étanchéité des multiples perçages. En effet, chaque agitateur 3a est actuellement monté dans la cuve au niveau d'un perçage réalisé dans la paroi de la cuve délimitant au moins une partie de son espace interne 1a, via un raccord disposant d'une étanchéité du type joint d'étanchéité et étant vissé dans la paroi de la cuve. Un tel agitateur 3a monté dans un tel perçage est illustré sur la figure 1 et peut être prévu dans une cuve 1 selon la présente invention, notamment dans le cas où celle-ci ne comporte pas une telle rampe de brassage 30a telle qu'illustrée sur la figure 2. Chaque agitateur 3a, isolé ou regroupé sur une rampe 30a de brassage, forme une buse de projection (ou de brassage) permettant de projeter dans l'espace interne de la cuve 1 un produit liquide.

Plus particulièrement, comme on peut le voir sur la figure 2, la rampe 30a de brassage peut comporter une conduite 31a à laquelle sont connectés les agitateurs 3a de la rampe 30a de brassage. La conduite 31a est connectée (de manière fluidique) à l'arrivée d'agitation 3c et alimente chaque agitateur 3a avec le produit liquide sous pression qui circule dans la conduite 31a. La fixation de la rampe 30a d'agitateurs 3a (ou de brassage) sur la cuve 1 peut être réalisée via des moyens de fixation tels que des vis.

Si on se réfère à la figure 6, on peut voir qu'un élément de fermeture 4b d'une ouverture d'accès 4 latérale inférieure, ménagée dans la ou l'une des paroi(s) latérale(s) 1c de la cuve 1 au-dessus du fond 1b de la cuve 1, peut supporter, par exemple, une arrivée d'incorporation 3e.

Ainsi, dans le cas où la présente invention prévoit de regrouper les agitateurs 3a sur une rampe 30a de brassage et que l'élément de fermeture 5b amovible supporte une arrivée d'agitation 3c connectée à la rampe 30a de brassage, la seule connexion à effectuer dans l'espace interne de la cuve 1 peut être celle entre l'arrivée agitation 3c et la conduite 31a de la rampe 30a de brassage. Les autres connexions, par exemple pour l'incorporation, l'aspiration ou la vidange peuvent être réalisées à l'extérieur de l'élément de fermeture 5b amovible.

La jauge de niveau 30f peut être insérée dans l'espace interne de la cuve 1 jusque dans sa partie basse par l'ouverture d'accès 2 supérieure de sorte que le flotteur 3f vienne se positionner dans la cavité 51b de l'élément de fermeture 5b lors de sa fermeture (figures 2 et 5). La jauge de niveau 30f permet de mesurer la quantité de liquide présent dans la cuve 1. Ainsi l'opérateur prépare exactement le volume de bouillie nécessaire dans la cuve 1 pour limiter le volume résiduel en fin d'application. La jauge de niveau 30f peut être constituée d'un flotteur 3f relié par un câble comme on peut le voir sur les figures 2 et 5.

La présente invention peut prévoir de mettre à disposition de l'utilisateur, pour une ouverture d'accès 4, 5 inférieure, plusieurs types d'éléments de fermeture 4b, 5b, par exemple un élément de fermeture 5 tel qu'illustré sur la figure 3, présentant des formes différentes et/ou supportant et/ou recevant des composants fonctionnels différents, mais étant tous aptes à fermer l'orifice 4a, 5a de l'ouverture d'accès 4, 5 inférieure correspondante.

Ainsi, grâce à cette ou ces ouverture(s) d'accès 4, 5 inférieure(s) située(s) à proximité des composants fonctionnels 3a, 3b, 3c, 3d, 3e, 3f de la partie basse de la cuve 1, leur montage et/ou remplacement est grandement facilité et surtout avec un risque d'exposition direct et indirect aux produits phytosanitaires diminué pour l'opérateur, puisqu'il peut accéder directement à ces composants sans nécessiter d'entrer entièrement dans la cuve 1, comme c'est le cas avec les cuves classiques, en passant par la ou l'une des ouvertures d'accès 2 supérieur(e).

La présente invention a également pour objet un pulvérisateur comprenant au moins une cuve 1, notamment une cuve 1 principale.

Conformément à la présente invention, dans un tel pulvérisateur la ou au moins l'une des cuve(s) 1, le cas échéant la cuve 1 principale, consiste en un dispositif de cuve selon la présente invention.

Un tel pulvérisateur peut comporter une cuve 1 principale, une pompe, une rampe d'épandage et un système de régulation (non représentés). Le dispositif de cuve selon la présente invention peut alors former la cuve 1 principale, par exemple telle qu'illustrée sur les figures annexées. Un tel pulvérisateur peut être du type porté ou trainé ou automoteur, comme décrit plus haut.

La pompe a pour rôle d'aspirer, de refouler et de mettre le liquide sous pression. La pompe est apte et destinée à aspirer le liquide contenu dans la cuve principale pour le refouler sous pression dans la rampe d'épandage. Le système de régulation peut permettre d'épandre la bonne dose en fonction de divers paramètres (vitesse d'avance, pression de pulvérisation, par exemple). Ces différents éléments d'aspiration, d'épandage et de régulation sont bien connus de l'homme du métier et ne sont pas décrits plus en détail.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de cuve pour pulvérisateur, le dispositif comprenant, d'une part, une cuve (1) comportant un espace interne (1a) apte et destiné à recevoir un produit liquide à épandre, un fond (1b) et au moins une paroi latérale (1c) s'élevant depuis le fond (1b) et, d'autre part, au moins une ouverture d'accès (2), dite ouverture d'accès (2) supérieure, du type trou d'homme, ménagée dans la partie haute de la cuve (1) et au moins un composant fonctionnel (3a, 3b, 3c, 3d, 3e, 3f) situé dans l'espace interne (1a) de la partie basse de la cuve (1), l'ouverture d'accès (2) supérieure comportant un orifice (2a) et un dispositif de fermeture (2b), **caractérisé en ce qu'**il comprend en outre au moins une ouverture d'accès (4, 5) inférieure ménagée dans la cuve (1) à un niveau inférieur à celui de l'ouverture d'accès (2) supérieure et permettant d'accéder, depuis l'extérieur de la cuve (1), au ou à au moins l'un des composant(s) fonctionnel(s) (3a, 3b, 3c, 3d, 3e, 3f) situé(s) dans la partie basse de la cuve (1).

2. Dispositif de cuve, selon la revendication 1, **caractérisé en ce que** l'ouverture d'accès (4, 5) inférieure permet d'accéder à au moins deux composants fonctionnels (3a, 3b, 3c, 3d, 3e, 3f) situés dans la partie basse de la cuve (1).

3. Dispositif de cuve, selon la revendication 1 ou 2, **caractérisé en ce que** l'ouverture d'accès (4, 5) inférieure comprend un orifice (4a, 5a) et un dispositif de fermeture (4b, 5b, 4c, 5c, 4d, 5d) comportant un élément de fermeture (4b, 5b), de préférence amovible, des moyens de verrouillage (4c, 5c) et des moyens d'étanchéité (4d, 5d) et **en ce que** le dispositif de fermeture (4b, 5b, 4c, 5c, 4d, 5d) permet, dans une position de fermeture, de fermer hermétiquement l'orifice (4a, 5a) tout en résistant à la pression exercée par le produit liquide et, dans une position d'ouverture, d'ouvrir l'orifice (4a, 5a) de sorte à créer un accès à l'espace interne (1a).

4. Dispositif de cuve, selon l'une quelconque des revendications 1 à 3, **caractérisé en ce que** les dimensions de l'orifice (4a, 5a) de l'ouverture d'accès (4, 5) inférieure sont inférieures, identiques ou supérieures à celles de l'orifice (2a) de l'ouverture d'accès (2, 3) supérieure.

5. Dispositif de cuve, selon l'une quelconque des revendications 1 à 4, **caractérisé en ce que** l'ouverture d'accès (4, 5) inférieure est située dans la partie basse de la cuve (1), de préférence à proximité du fond (1b).

6. Dispositif de cuve, selon l'une quelconque des revendications 1 à 5, **caractérisé en ce que** l'orifice (4a, 5a) de l'ouverture d'accès (4, 5) inférieure présente une forme circulaire, rectangulaire ou carrée.

7. Dispositif de cuve, selon l'une quelconque des revendications 1 à 6 **caractérisé en ce que** l'ouverture d'accès (4) inférieure est ménagée dans la ou l'une des paroi(s) latérale(s) (1c) de la cuve (1) au-dessus du fond (1b) de la cuve (1).

8. Dispositif de cuve, selon l'une quelconque des revendications 1 à 7, **caractérisé en ce que** la ou au moins l'une des ouverture(s) d'accès (5) inférieure(s) est ménagée dans le fond (1b) de la cuve (1), de préférence dans la partie du fond (1b) formant le point le plus bas de la cuve (1).

9. Dispositif de cuve, selon la revendication 8, **caractérisé en ce que** l'ouverture d'accès (5) inférieure est ménagée dans la partie du fond (1b) formant le point le plus bas de la cuve (1) et configurée de sorte à faire office de puisard, l'élément de fermeture (5b) de l'ouverture d'accès (5) inférieure comportant une cavité (51b) s'ouvrant vers l'extérieur de sorte à communiquer, en position de fermeture de l'élément de fermeture (5b), avec l'espace interne (1a) de la cuve (1) à travers l'orifice (5a) de l'ouverture d'accès (5b) inférieure et à recevoir le produit liquide.

10. Dispositif de cuve, selon l'une quelconque des revendications 1 à 9, **caractérisé en ce que** l'orifice (4a, 5a) de l'ouverture d'accès (4, 5) inférieure est entouré par un bord de verrouillage, dit premier bord (40a, 50a) de verrouillage, de préférence plat, l'élément de fermeture (4b, 5b) étant amovible et comportant un bord de verrouillage, dit deuxième bord (40b, 50b) de verrouillage, de préférence plat et **en ce que** les premier et deuxième bords (40a, 50a, 40b, 50b) de verrouillage sont immobilisés l'un par rapport à l'autre grâce aux moyens de verrouillage (4c, 5c) dans la position de fermeture.

11. Dispositif de cuve, selon la revendication 10, **caractérisé en ce que** les moyens d'étanchéité (4d, 5d) consistent en au moins un joint d'étanchéité, de préférence plat ou torique, intercalé et pressé entre les premier et deuxième bords (40a, 50a, 40b, 50b) périphériques.

12. Dispositif de cuve, selon l'une quelconque des revendications 1 à 11, **caractérisé en ce que** l'élément de fermeture (4b, 5b) est apte et destiné à supporter ou recevoir fonctionnellement le ou au moins l'un des composant(s) fonctionnel(s) (3a, 3b, 3c, 3d, 3e, 3f).

13. Pulvérisateur comprenant au moins une cuve, notamment une cuve (1) principale, **caractérisé en ce que** la ou au moins l'une des cuve(s) (1), le cas échéant la cuve (1) principale, consiste en un dispositif de cuve selon l'une quelconque des revendications 1 à 12.
